Europäisches Patentamt

European Patent Office

Office européen des brevets

(11) Publication number: **0 270 311 B1**

# EUROPEAN PATENT SPECIFICATION

(45) Date of publication of patent specification: 14.08.91    (51) Int. Cl.⁵: **B62D 1/16**

(21) Application number: 87310483.0

(22) Date of filing: 27.11.87

(54) A mounting arrangement for a steering column in a motor vehicle.

(30) Priority: 02.12.86 GB 8628763

(43) Date of publication of application:
08.06.88 Bulletin 88/23

(45) Publication of the grant of the patent:
14.08.91 Bulletin 91/33

(84) Designated Contracting States:
DE ES FR GB IT

(56) References cited:
GB-A- 1 292 256
US-A- 3 643 981

(73) Proprietor: FORD MOTOR COMPANY LIMITED
Eagle Way
Brentwood Essex CM13 3BW(GB)GB IT

Proprietor: FORD FRANCE SOCIETE AN-
ONYME
344 Avenue Napoléon Bonaparte B.P. 307
F-92506 Rueil Malmaison Cedex(FR)FR

Proprietor: FORD-WERKE AKTIENGESELL-
SCHAFT
Werk Köln-Niehl Henry-Ford-Strasse Post-
fach 60 40 02
W-5000 Köln 60(DE)DE

Proprietor: FORD MOTOR COMPANY
County of Wayne
Dearborn, MI 48120(US)ES

(72) Inventor: Jones, Bryan
34 St.Andrews Road
Boreham Chelmsford CM3 3BY(GB)

(74) Representative: Messulam, Alec Moses et al
A. Messulam & Co. 24 Broadway
Leigh on Sea Essex SS9 1BN(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a mounting arrangement for mounting a steering column in a motor vehicle. It is important that the steering column should be capable of being quickly and accurately mounted when a motor vehicle is being assembled.

GB-A-1 292 256 (corresponding to the preamble of claim 1) discloses a steering column which has a lower end passed through a hole in the vehicle floor and an upper end secured by bolts which have the effect of securing the column in compression. This compression is relied upon to prevent movement of the column in the car.

US-A-3 643 981 discloses a steering column which is secured to the vehicle, both as the top end and at the bottom end, by doing up bolts.

According to the present invention, there is provided a mounting arrangement for a steering column, the arrangement comprising upper and lower mounting locations secured to a vehicle body structure, the lower mounting location being in the form of an aperture in which the column can be received, and the upper mounting location being a mounting bracket cooperating with a column bracket fitted on the column, characterised in that the lower mounting location is a bracket with a cylindrical hole and that a plastics collar, which carries internally projecting bosses locating in corresponding holes in the steering column, is push-fitted in an annular gap between the column and the bracket so as to be a tight fit in the gap, whereby the collar is frictionally secured in the hole and the column is frictionally secured in the collar, and wherein the column bracket is secured to the upper body mounting bracket by means of disengageable fasteners.

The frictional fit of the column in the bracket as a result of the presence of the collar means that the column will be firmly held in place, both during assembly and afterwards, without having to rely on the distance between two points remaining constant.

The plastics collar preferably has a series of internal radial projections and a series of external radial projections, the internal and external projections being regularly spaced around the collar circumference and with the internal projections being angularly offset relative to the external projections so that, when the collar is in place the cylindrical collar wall is deformed into a wave-like form.

The projections are preferably in the form of ribs which extend in an axial direction along the internal and external walls of the collar.

The internally projecting bosses which locate in correspondingly shaped holes in the steering column structure to locate the collar on the column are preferably cylindrical.

The collar may have a split circumference.

The column bracket preferably has a flat face which mates with a flat face on the upper body mounting bracket and can be secured thereto by means of bolts. The column bracket engages with the column in such a way that the column cannot be pulled upwardly through the bracket, but can collapse downwardly through the bracket in the event of an impact to the vehicle.

The invention will now be further described, by way of example with reference to the accompanying drawings in which:

Figure 1 is a schematic side view of a mounting arrangement in accordance with the invention;

Figure 2 is a plan view of the arrangement of Figure 1;

Figure 3 is an end view of the plastics collar; and

Figure 4 is a section through the collar of Figure 3.

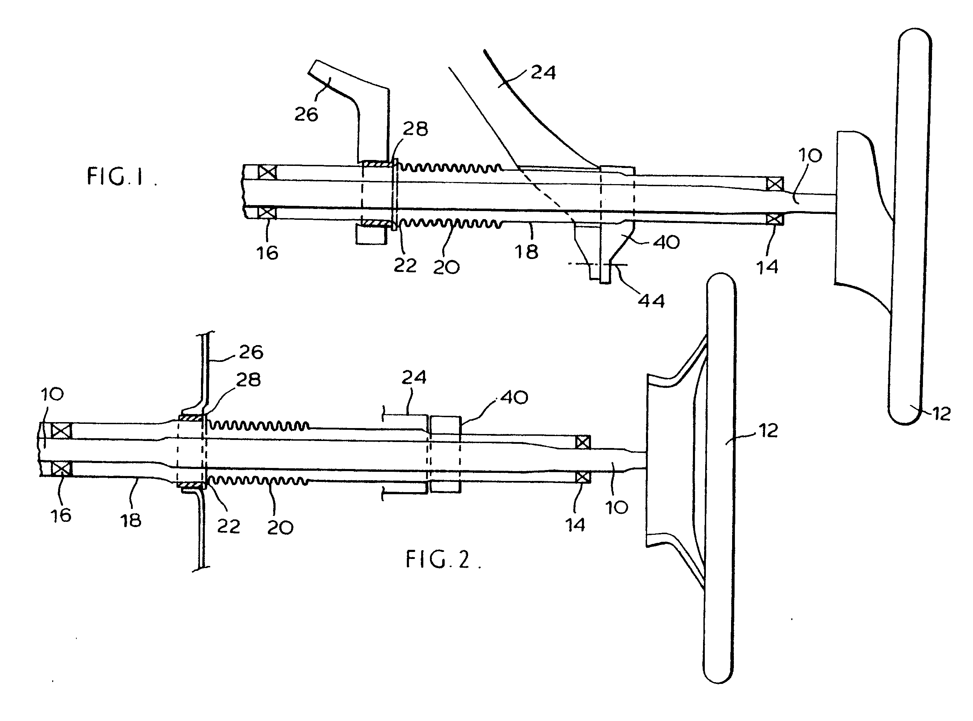

The arrangement shown in Figure 1 comprises a steering wheel 12 mounted on the end of a shaft 10. The shaft 10 is journalled by means of bearings 14 and 16 within a tube 18. At its lower end, the shaft 10 is connected in a conventional manner to a steering gear (not shown). The tube 18 is formed with a convoluted portion 20 above a lowermost enlarged convolution 22 which serves as an abutment against which the required collapse of the steering column can take place.

Attached to the vehicle body structure is an upper body mounting bracket 24 and a lower body mounting bracket 26. Both of these brackets will be formed of shaped sheet metal welded to the body structure. Both the upper and lower brackets have holes through which the steering column can be axially passed before the lower end of the column is connected to the steering gear.

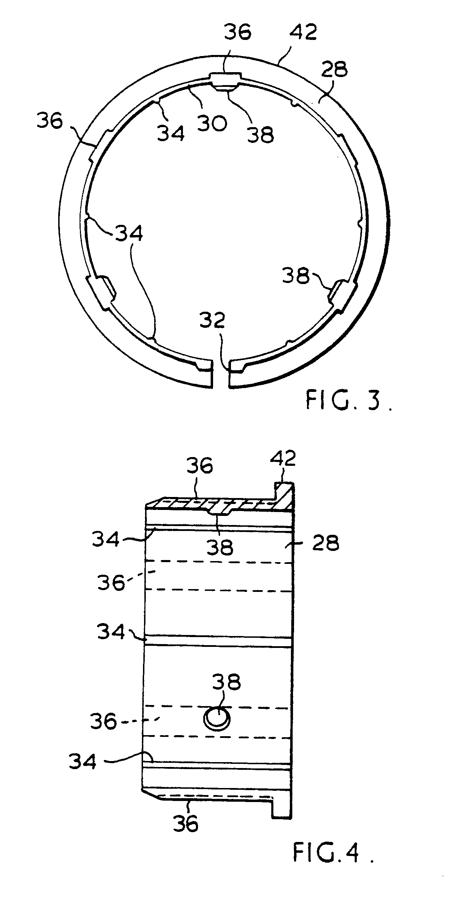

A plastics sleeve 28 is mounted on the outside of the tube 18, and this fits inside the hole in the bracket 26. The collar 28 is shown in more detail in Figures 3 and 4 and has a circumferential wall 30 which is split at one point 32. The wall 30 has internal projections 34 at spaced positions around its circumference and external projections 36 at spaced positions around the external circumference. Each projection 36 is placed halfway between two internal projections 34. Also on the internal periphery of the wall 30 are three projecting bosses 38 which engage in corresponding holes in the tube 18 and locate the collar in place on the tube.

The external diameter of the tube 18 (at the point where the collar 28 is fitted) will be substantially equal to the diameter of the circle on which the innermost points of the ribs 34 lie. The internal diameter of the hole in the bracket 26 will be slightly less than the diameter of the circle on which the outer surfaces of the ribs 36 lie, so that when the collar is placed on the tube, and the tube is inserted through the hole in the bracket 26, the collar wall 30 will be distorted with those parts of the collar wall where the ribs 36 lie being forced inward. This will therefore ensure that a firm, tight connection is made between the tube 18 and the bracket 26.

In use, the steering column is assembled off-line with the plastics collar 28 clipped onto the tube at the appropriate place below the convolution 22, and a column bracket 40 is slid onto the top end of the tube. When the assembly is mounted in a vehicle, the column is inserted through the hole in the body mounting bracket 24 and through the hole in the body mounting bracket 26 until the flange 42 on the collar 28 butts up against the upper face of the bracket 26. The column bracket 40 is then secured to the mounting face of the bracket 24 by means of a nut and bolt connection indicated schematically by the line 44. The column is then firmly secured in place simply by placing one or, preferably two, bolts at 44. The connection between the column bracket 40 and the tube 18 is such that the tube cannot be drawn upwardly through the bracket, but the bracket can slide in the opposite direction relative to the tube until the bolts 44 have been done up.

Thus the column can be mounted in the vehicle by tightening bolts at one location only, and at a location high up on the column where access is easy. This also facilitates servicing of the assembly.

## Claims

1. A mounting arrangement for a steering column, the arrangement comprising upper and lower mounting locations (24,26) secured to a vehicle body structure, the lower mounting location (26) being in the form of an aperture in which the column (18) can be received, and the upper mounting location being a mounting bracket (24) cooperating with a column bracket (40) fitted on the column (18), characterised in that the lower mounting location is a bracket (26) with a cylindrical hole and that a plastics collar, which carries internally projecting bosses (38) locating in corresponding holes in the steering column, is push-fitted in an annular gap between the column (18) and the bracket (26) so as to be a tight fit in the gap, whereby the collar is frictionally secured in the hole and the column (18) is frictionally secured in the collar (28), and wherein the column bracket (40) is secured to the upper body mounting bracket (24) by means of disengageable fasteners (44).

2. A mounting arrangement as claimed in Claim 1, wherein the plastics collar (28) has a series of internal radial projections (34) and a series of external radial projections (36), the internal and external projections being regularly spaced around the collar circumference and with the internal projections being angularly offset relative to the external projections so that, when the collar is in place the cylindrical collar wall is deformed into a wave-like form.

3. A mounting arrangement as claimed in Claim 2, wherein the projections (34, 36) are in the form of ribs which extend in an axial direction along the internal and external walls of the collar (28).

4. A mounting arrangement as claimed in any preceding claim, wherein the bosses (38) on the plastics collar (28) are cylindrical.

5. A mounting arrangement as claimed in any preceding claim, wherein the collar (28) has a split circumference.

6. A mounting arrangement as claimed in any preceding claim, wherein the column bracket (40) has a flat face which mates with a flat face on the upper body mounting bracket (24) and can be secured thereto by means of bolts (44).

7. A mounting arrangement as claimed in Claim 6, wherein the column bracket (40) engages with the column (18) in such a way that the column cannot be pulled upwardly through the bracket, but can collapse downwardly through the bracket in the event of an impact to the vehicle.

## Revendications

1. Système de montage pour une colonne de direction, le système comprenant des endroits de montage supérieur et inférieur (24, 26) fixés à une structure de carrosserie de véhicule, l'endroit de montage inférieur (26) se présentant sous la forme d'une ouverture dans laquelle la colonne (18) peut être reçue, et l'endroit de montage supérieur étant une console de montage (24) coopérant avec un support de colonne (40) ajusté sur la colonne (18), caractérisé par le fait que l'endroit de montage inférieur est une console (26) munie d'un trou cylindrique, et qu'un collier en matière plastique, lequel porte des bossages (38) en saillie vers l'intérieur se logeant dans des trous correspondants ménagés dans la colonne de direction, est ajusté par poussée dans un espace annulaire situé entre la colonne (18) et la console (26) de façon à réaliser un ajustement étroit dans l'intervalle, le collier étant fixé par friction dans le trou et la colonne (18) étant fixée par friction dans le collier (28), et dans lequel le support de colonne (40) est fixé à la console supérieure de montage sur la carrosserie (24) au moyen de fixation amovibles (44).

2. Système de montage selon la revendication 1, dans lequel le collier en matière plastique (28) comporte une série de saillies radiales intérieures (34) et une série de saillies radiales extérieures (36), les saillies intérieures et extérieures étant régulièrement espacées sur le pourtour du collier et les saillies intérieures étant angulairement décalées par rapport aux saillies extérieures, de sorte que, lorsque le collier est en place, la paroi cylindrique du collier est déformée en forme d'ondulations.

3. Système de montage selon la revendication 2, dans lequel les saillies (34, 36) présentent la forme de nervures qui s'étendent dans une direction axiale le long des parois intérieure et extérieure du collier (28).

4. Système de montage selon l'une quelconque des revendications précédentes, dans lequel les bossages (38) présents sur le collier en matière plastique (28) sont cylindriques.

5. Système de montage selon l'une quelconque des revendications précédentes, dans lequel le collier (28) présente un pourtour fendu.

6. Système de montage selon l'une quelconque des revendications précédentes, dans lequel le support de colonne (40) présente une face plate qui est appariée à une face plate ménagée sur la console supérieure de montage sur la carrosserie (24) et qui peut y être fixée au moyen de boulons (44).

7. Système de montage selon la revendication 6, dans lequel le support de colonne (40) est en prise avec la colonne (18) de telle manière que la colonne ne puisse pas être tirée vers le haut à travers le support, mais qu'elle puisse s'écraser vers le bas à travers le support dans le cas d'un choc sur le véhicule.

**Patentansprüche**

1. Montageanordnung für eine Lenksäule, wobei die Anordnung obere und untere, an der Karosseriestruktur befestigte Montagestellen (24, 26) umfaßt, wobei die untere Montagestelle (26) die Form einer Öffnung hat, in der die Säule (18) aufgenommen werden kann, und die obere Montagestelle ein Montagehalter (24) ist, der mit einem an der Säule (18) angebrachten Säulenhalter (40) zusammenwirkt, dadurch gekennzeichnet, daß die untere Montagestelle ein Halter (26) mit einem zylindrischen Loch ist und daß ein Kunststoffbund, der nach innen vorstehende, sich in entsprechende Löcher in der Lenksäule einlagernde runde Vorsprünge (38) trägt, in einen ringförmigen Spalt zwischen der Säule (18) und dem Halter (26) so passend eingeschoben wird, daß er fest in dem Spalt sitzt, wodurch der Bund kraftschlüssig in dem Loch und die Säule (18) kraftschlüssig in dem Bund (28) befestigt ist, und wobei der Säulenhalter (40) mittels lösbarer Befestigungsmittel (44) am oberen Karosseriemontagehalter (24) befestigt ist.

2. Montageanordnung nach Anspruch 1, bei der der Kunststoffbund (28) eine Reihe innerer radialer Vorsprünge (34) und eine Reihe äußerer radialer Vorsprünge (36) aufweist, wobei die inneren und äußeren Vorsprünge in regelmäßigen Abständen um den Bundumfang angeordnet sind und die inneren Vorsprünge gegenüber den äußeren Vorsprüngen so winklig versetzt sind, daß die zylindrische Bundwand in eine wellenartige Form deformiert wird, wenn der Bund an Ort und Stelle ist.

3. Montageanordnung nach Anspruch 2, bei der die Vorsprünge (34, 36) die Form von Rippen haben, die sich in einer axialen Richtung entlang den inneren und äußeren Wänden des Bundes (28) erstrecken.

4. Montageanordnung nach einem der vorhergehenden Ansprüche, bei der die runden Vorsprünge (38) an dem Kunststoffbund (28) zylindrisch sind.

5. Montageanordnung nach einem der vorhergehenden Ansprüche, bei der der Bund (28) einen gespaltenen Umfang hat.

6. Montageanordnung nach einem der vorhergehenden Ansprüche, bei der der Säulenhalter (40) eine flache Vorderseite aufweist, die mit einer flachen Vorderseite am oberen Karosseriemontagehalter (24) zusammenpaßt und mittels Bolzen (44) daran befestigt werden kann.

7. Montageanordnung nach Anspruch 6, bei der der Säulenhalter (40) die Säule (18) so in Eingriff nimmt, daß sie nicht nach oben durch den Halter gezogen werden, sondern bei einem Aufprall des Fahrzeugs nach unten durch den Halter zusammenfallen kann.

FIG.1.

26

28

24

10

16

22 20

18

40

14

44

EP 0 270 311 B1

26

28

10

24

40

16

18

22 20

12

14

10

12

FIG.2.

12

FIG. 3.

FIG.4.